# NEUE EUROPÄISCHE PATENTSCHRIFT

(11) **EP 1 902 871 B2**
(45) Veröffentlichungstag und Bekanntmachung des Hinweises auf die Entscheidung über den Einspruch: **28.11.2012**
(45) Hinweis auf die Patenterteilung: 21.10.2009
(21) Anmeldenummer: 07400022.5
(22) Anmeldetag: 14.09.2007
(51) Int. Cl.: B60D 1/54

(54) **Anhängekupplung**
Tow bar
Attelage

(30) Priorität: 18.09.2006 DE 102006044341; 19.01.2007 DE 102007003773
(43) Veröffentlichungstag der Anmeldung: 26.03.2008
(73) Patentinhaber: WESTFALIA - Automotive GmbH, 33378 Rheda-Wiedenbrück (DE)
(72) Erfinder: Abels, Frank O., D-29633 Munster (DE)
(74) Vertreter: Bregenzer, Michael

(56) Entgegenhaltungen:
- EP-A- 1 407 901
- EP-A- 1 488 943
- EP-A- 1 535 765
- EP-A1- 1 557 298
- EP-A2- 1 142 732
- DE-A1- 1 985 961
- DE-A1- 10 045 296
- DE-A1- 10 243 044
- DE-A1- 19 826 618
- DE-B3- 10 327 706
- DE-U1-202006 009 230

## Beschreibung

Die Erfindung betrifft eine Anhängekupplung für Kraftfahrzeuge mit einem absenkbaren und schwenkbaren Kupplungsarm. Der Kupplungsarm ist mit einer Kugel zur Befestigung eines Anhängers versehen und kann aus einer von außerhalb des Fahrzeuges nicht sichtbaren Nichtgebrauchsstellung in eine zur Befestigung des Anhängers geeigneten Gebrauchsstellung bewegt werden gemäß Oberbegriff des Anspruches 1. Eine solche Anhängekupplung geht aus EP 1 557 298 A1 hervor.

Es sind verschiedene Ausführungsformen solcher Anhängekupplungen bekannt, z.B. aus EP 1 084 871 B1 oder DE 198 26 618 C2, bei denen der Kupplungsarm mit einer vertikal ausgerichteten Achse verbunden ist, die aus einer fahrzeugfesten Führung durch motorischen Antrieb nach unten gesenkt und dann in Betriebsposition geschwenkt wird. Diese Ausführungen haben jedoch den Nachteil, dass zur Realisierung ein hoher technischer Aufwand betrieben werden muss, weil erstens eine genaue Linearführung der Achse erforderlich ist, sowie zur Erzeugung einer etwa 90° Drehung in die Betriebsposition diese Achse noch in genau gefertigten Kurvenbahnen ablaufen muss, was zusammen mit dem motorischen Antrieb und der zusätzlich noch erforderlichen Verriegelung zu hohen Kosten führt, die eine Anhängekupplung nach diesem Verfahren teuer macht.

Aus DE 29 35 474 C2 ist eine Anhängekupplung mit einem in einen fahrzeugfesten Halter steckbaren Kupplungsarm bekannt.

In der DE 20 2006 009 230.7 ist eine Anhängekupplung beschrieben, die zwar die Nachteile der Anhängekupplungen aus EP 1 084 871 B1 oder DE 198 26 618 C2 nicht aufweist, aber nur für Fahrzeuge mit großer Bodenfreiheit geeignet ist. Bei Fahrzeugen mit geringer Bodenfreiheit kann es beim Ausschwenken des Kupplungsarms, insbesondere bei großer Beladung des Fahrzeuges und damit geringerer Bodenfreiheit, zur Kollision mit dem Straßenbelag kommen.

Aufgabe der Erfindung ist es daher, eine Anhängekupplung für Fahrzeuge mit geringer Bodenfreiheit bereit zu stellen.

Zur Lösung der Aufgabe ist eine Anhängekupplung gemäß der technischen Lehre des Anspruchs 1 vorgesehen.

Das erfindungsgemäße Konzept ermöglicht es, dass die Anhängekupplung platzsparend am Kraftfahrzeug, beispielsweise einem Personenkraftwagen, untergebracht werden kann. Der Kupplungsarm weist zwischen seinem hochstehenden Abschnitt, an dessen Ende die Kupplungskugel angeordnet ist, und dem schräg in der Linearführung geführten Achskörper zwei oder mehrere Krümmungen auf, so dass einerseits die Längsführung schräg und somit Platz sparend im Fahrzeug angeordnet ist, beispielsweise in einem Ruhestellungsraum zwischen Fahrzeugkarosserie und Stoßfänger, während der hochstehende Armabschnitt in Fahrzeuglängsrichtung verläuft.

Das erfindungsgemäße Konzept sieht vor, dass die Kupplung recht einfach aufgebaut ist. Die Linearführung wird z.B. durch ein Aufnahmerohr gebildet oder enthält ein Aufnahmerohr. Die Linearführung, beispielsweise das Aufnahmerohr, führt den Achskörper linear. Zweckmäßigerweise bildet die Linearführung zudem ein Drehlager für den Kupplungsarm. Somit sind keine weiteren Führungselemente, die die Anhängekupplung kompliziert machen würden, erforderlich.

Gegenüber Anhängekupplungen mit steckbaren Kupplungsarm, wie z.B. aus DE 29 35 474 C2 bekannt, ist ein Achskörper am Kupplungsarm vorgesehen, der ebenso wie Aufnahmerohr zum Halten des Achskörpers eine solche Länge aufweist, dass beim Herausziehen des Kupplungsarms noch eine Führung des Achskörpers im Aufnahmerohr vorhanden ist.

Die Linearführung hat z.B. eine Schrägneigung von etwa 45° bezüglich der Horizontalen und der Vertikalen. Vorzugsweise verläuft die Linearführung in Fahrzeugquerrichtung. Es versteht sich, dass bezüglich der Fahrtrichtung des Fahrzeuges, d.h. der Fahrzeuglängsrichtung auch andere Positionen der Linearführung möglich sind.

Der Kupplungsarm kann um ca. 90°, vorzugsweise bei gleichzeitiger Führung im Aufnahmerohr, manuell geschwenkt werden. Nach diesem Schwenkvorgang wird die Achse der Anhängekupplung zur Verstauung hinter der Fahrzeugheckverkleidung des Kraftfahrzeuges wieder manuell oder motorisch nach oben geschoben und dort mit geeigneten Mitteln, z.B. nach dem Stand der Technik mit geführten Kugeln, verriegelt.

Prinzipiell wäre es auch denkbar, dass der Kupplungsarm außerhalb der Linearführung drehbar ist. Vorzugsweise ist er jedoch noch innerhalb der Linearführung, wenn er manuell um den gewünschten Drehwinkel schwenkbar ist. Es versteht sich, dass eine Schwenkbewegung des Kupplungsarms zwischen der Gebrauchsstellung und der Ruhestellung möglich ist, die größer oder kleiner als 90° ist.

Es versteht sich, dass auch zusätzlich eine am Kupplungsarm angeordnete Verriegelung möglich ist. Beispielsweise kann insbesondere in dem Achskörper ein Sperrbolzen angeordnet sein, der Kugeln, Bolzen, Wälzkörper, Achsstücke oder sonstige Verriegelungselemente nach radial außen verdrängt. Am Kupplungsarm befindet sich dann beispielsweise eine manuelle Betätigungshandhabe, z.B. ein Handrad oder ein Hebel, mit der der Sperrbolzen axial verstellbar ist. Die Kugeln oder sonstige Verriegelungselemente sind in radial verlaufenden Führungskanälen des Achskörpers oder einem sonstigen Teil des Kupplungsarmes angeordnet und werden von dem Sperrbolzen nach radial außen verdrängt.

Wenn das Aufnahmerohr in einem Winkel von beispielsweise ca. 45° zur Horizontalen und ferner quer zur Fahrtrichtung beziehungsweise Fahrzeuglängsrichtung angeordnet ist und der Kupplungsarm um einen ähnlichen oder den gleichen Winkel zur Mittelachse des Achskörpers versetzt ist, befindet sich der Kupplungsarm in Gebrauchsstellung, bezogen zur Fahrzeugaufstandsfläche, in vertikaler Position.

Wird nun eine z.B. in den Achskörper oder eine sonstige Stelle des Kupplungsarms eingreifende Verriegelung gelöst, gleitet der Achskörper zunächst durch Schwerkraft und/oder manuelle Betätigung aus dem Aufnahmerohr nach unten, gleichzeitig senkt sich ebenfalls durch Schwerkraft der am Achskörper angeordnete oder mit diesem einstückige Kupplungsarm und hat danach in unterster Position eine annähernd horizontale Stellung, wodurch eine große Bodenfreiheit entsteht. Aus dieser Position kann nun der Kupplungsarm nach manuellem oder motorischem Verschwenken manuell oder motorisch nach oben in das Aufnahmerohr geschoben werden, wird dort verriegelt und ist damit hinter der Fahrzeugheckverkleidung nicht sichtbar untergebracht. Das Ausschwenken des Kupplungsarmes erfolgt in umgekehrter Reihenfolge.

In der Nichtgebrauchsstellung ist der Kupplungsarm z.B. im Fahrzeug oder einem Ruhestellungsraum zwischen einem Stoßfänger und einer Fahrzeugkarosserie des Fahrzeugs angeordnet.

Erfindungsgemäß dienen Formschlusskonturen zur Drehverriegelung bzw. Drehsicherung des Kupplungsarms am Halter. Dabei ist es möglich, dass vorstehende Formschlusskonturen am Kupplungsarm, beispielsweise unterhalb des Achskörpers oder am Achskörper, vorhanden sind, während korrespondierende Aufnahme-Formschlusskonturen am Halter, z.B. am Ende der Linearführung positioniert sind. Es versteht sich, dass auch die umgekehrte Bauform denkbar ist, dass nämlich beispielsweise am Halter Formschluss-Vorsprünge vorgesehen sind, die zur Drehsicherung des Kupplungsarmes in korrespondierende Formschlussaufnahmen am Kupplungsarm eingreifen.

Vorzugsweise ist eine einzige Verriegelung sowohl für die Gebrauchsstellung als auch für die Nichtgebrauchsstellung vorgesehen.

Eines oder mehrere bewegliche Verriegelungsformschlusselemente der Verriegelung oder Verriegelungseinrichtung, z.B. Kugeln, Bolzen, Wälzkörper oder dergleichen Formschlusselemente, sind vorteilhaft an einer fahrzeugfesten Führungseinrichtung, z.B. am fahrzeugfesten Halter, beweglich gelagert und in Richtung des Kupplungsarms in eine Verriegelungsstellung verlagerbar, bei der das mindestens eine Verriegelungsformschlusselement in mindestens eine Verriegelungsformschlussaufnahme am Kupplungsarm eingreift.

Für das mindestens eine Verriegelungsformschlusselement sind am Kupplungsarm, z.B. am durch die Linearführung und/oder einem Schwenklager geführten Achskörper oder einer sonstigen Stelle, axial zueinander beabstandete erste und zweite Verriegelungsformschlussaufnahmen, z.B. Kugelsitzrinnen, Kalotten oder dergleichen, angeordnet sind, wobei die ersten Verriegelungsformschlussaufnahmen für die Gebrauchsstellung und die zweiten Verriegelungsformschlussaufnahmen für die Nichtgebrauchsstellung vorgesehen sind. In der Gebrauchsstellung greift das mindestens eine Verriegelungsformschlusselement in die mindestens eine erste Verriegelungsformschlussaufnahme ein, in der Nichtgebrauchsstellung, z.B. nach axialem Verstellen und/oder Schwenken des Kupplungsarms, in die mindestens eine zweite Verriegelungsformschlussaufnahme. Zur Betätigung der mindestens einen Verriegelungseinrichtung kann ein Antriebsmotor vorgesehen sein.

Ferner ist es vorteilhaft, wenn zur Hub- und Senkbewegung und/oder zur Schwenkbewegung des Kupplungsarms einer oder mehrere Motoren und/oder mindestens eine Getriebe vorhanden sind.

Die Anhängekupplung kann eine Entnahmesicherung aufweisen, die verhindert, dass der Kupplungsarm von Halter entfernt werden kann. Somit ist der Kupplungsarm stets am Halter gesichert. Beispielsweise kann an einem Endbereich, z.B. der Stirnseite, des Kupplungsarms ein Vorsprung vorgesehen sein, der ein vollständiges Ausziehen des Kupplungsarmes aus der Linearführung, z.B. dem Aufnahmerohr, verhindert. Der Vorsprung schlägt z.B. eine vom Kupplungsarm entfernte Stirnseite des Aufnahmerohrs an, wenn der Kupplungsarm aus dem Aufnahmerohr herausgezogen wird.

Eine Hub- und Senkbewegung des Kupplungsarms wird zweckmäßigerweise durch eine Federanordnung unterstützt. Die Federanordnung kann beispielsweise eine am Achskörper einerseits und der Linearführung andererseits angreifende Feder umfassen. Es ist aber auch möglich, dass eine außenseitig am Halter und am Kupplungsarm befestigte Feder vorgesehen ist. Die Federanordnung wird beispielsweise gespannt, wenn der Kupplungsarm aus dem Halter 30 sozusagen ausgezogen wird. Die Federanordnung dämpft beispielsweise eine Senkbewegung des Kupplungsarms, so dass dieser gebremst wird. Bei einer Bewegung des Kupplungsarms nach oben, d.h. von einer Fahrbahnoberfläche weg, unterstützt die Federanordnung ebenfalls. Die Feder wird bei einer vorherigen Senkbewegung gespannt.

Ein Ausführungsbeispiel der Erfindung ist in den folgende Abbildungen dargestellt. Es zeigen:
- Fig. 1: einen Kupplungsarm und mit einem Achskörper,
- Fig. 2: ein Aufnahmerohr mit Befestigungslaschen,
- Fig. 3: das Aufnahmerohr aus Figur 2 mit einem Abschnitt eines Trägerrohres,
- Fig. 4: die Anhängekupplung gemäß Figur 1 in einer Nichtgebrauchsstellung C,
- Fig. 5: die Anhängekupplung gemäß Figur 1 in einer Zwischenstellung E,
- Fig. 6: die Anhängekupplung gemäß Figur 1 in einer Zwischenstellung G,
- Fig. 7: die Anhängekupplung gemäß Figur 1 in Gebrauchsstellung H;
- Fig. 8: einen Schnitt der Anhängekupplung gemäß Figur 1 etwa entlang einer Fahrzeugquerachse, wobei die Anhängekupplung in Gebrauchsstellung H ist.

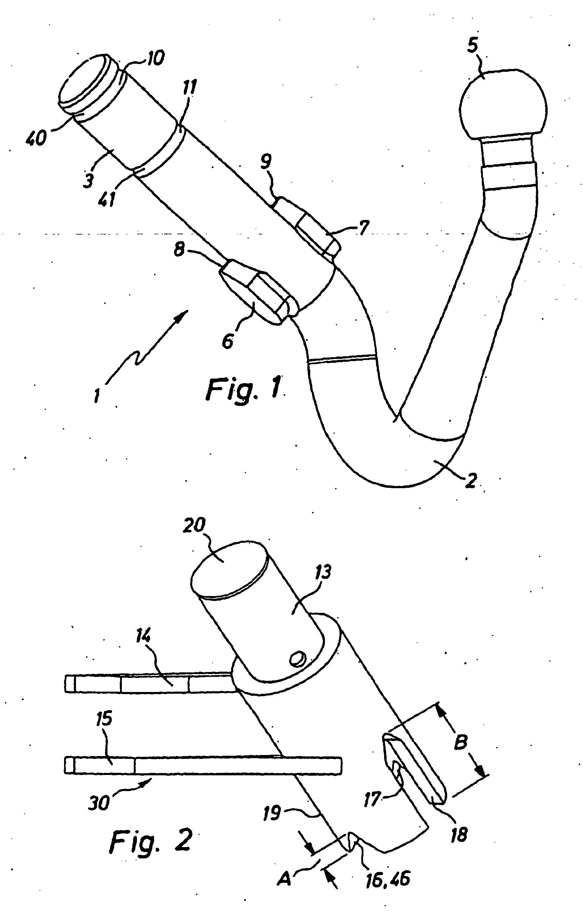

Die Anhängekupplung 1 enthält einen Kupplungsarm 2, einen Achskörper 3 sowie einen Halter 30, der eine Linearführung 43 aufweist. Die Linearführung 43 enthält z.B. ein Aufnahmerohr 13, das mit Befestigungslaschen 14, 15 an einem Träger 23 eines Fahrzeugs 25 befestigt ist. In den Fig. 1 bis 3 sind diese Komponenten näher dargestellt.

Fig. 1 zeigt den Kupplungsarm 2 in einer Schrägansicht. Ein Achskörper 3 und die Linearführung 43 verlaufen schräg zur Horizontalen. Ferner verlaufen der Achskörper 3 und die Linearführung 43 im wesentlichen in Fahrzeugquerrichtung des Fahrzeugs 25. Zwischen einem unteren Ende des Achskörpers 3 und einem Armabschnitt 55 des Kupplungsarms 2, an dessen freistehendem, nach oben gerichtetem Ende sich die Kupplungskugel 5 befindet, befinden sich Krümmungsabschnitte 64 und 65. Der Armabschnitt 55 steht in Fahrzeuglängsrichtung schräg geneigt zur Vertikalen hoch.

Der sich an den Achskörper 3 anschließende Krümmungsabschnitt 64 ist annähernd achtelkreisförmig. Der Krümmungsabschnitt 65 ist annähernd dreiachtelkreisförmig.

Die Krümmungsabschnitte 64 und 65 sind zueinander winkelig. Während eine Krümmung 4 des Krümmungsabschnitts 64 beispielsweise in Fahrzeugquerrichtung verläuft, ist eine Krümmung 54 des Krümmungsabschnittes 65 in einer in Fahrzeuglängsrichtung verlaufenden Ebene angeordnet. Die Ebenen der Krümmungen 5, 54 sind zueinander winkelig.

Anstelle der relativ scharfen Krümmung 54, die in einen geraden Abschnitt 56 des Kupplungsarmes 2 übergeht, könnte auch eine durchgehende, sich bis zur Kupplungskugel 5 erstreckende Krümmung vorgesehen sein. Am oberen Ende des geraden Abschnitts 56, der beispielsweise in einem Winkel von etwa 45° zur Horizontalen verläuft (geringere oder größere Neigungen sind ohne weiteres möglich) ist ein weiterer Krümmungsabschnitt 57 angeordnet, an dessen oberen Ende ein kurzer geradeverlaufender Abschnitt mit der Kupplungskugel 5 angeordnet ist.

Zwei im Bereich eines Fußpunkts des schräg verlaufenden Achskörpers 3, im Übergangsbereich zu den Krümmungsabschnitten 64, 65 sind beispielsweise dachkantförmige Riegelnasen 6, 7 angeordnet, deren verjüngte Enden 8, 9 nach oben gerichtet sind.

Fig. 2 zeigt das Aufnahmerohr 13 für den Kupplungsarm 2. Es kann mittels der zwei Befestigungslaschen 14, 15 fest am Träger 23 des Fahrzeuges 25 montiert werden. Das Aufnahmerohr 13 ist z.B. mit den Befestigungslaschen 14, 15 verschweißt. Der Träger 23 ist Teil des Fahrzeuges 25. Der Träger 23 umfasst z.B. ein Trägerrohr. Der Träger 23 ist z.B. ein Fahrzeug-Querträger, der zwischen einer Karosserie und einem Stoßfänger (nicht dargestellt) des Fahrzeugs 25 verläuft. Die Befestigungslaschen 14, 15 sind z.B. mit Bolzen 21 und Muttern 22 an den Träger 23 geschraubt.

Am unteren Ende des Aufnahmerohres 13 sind insgesamt vier Formschluss-Aufnahmen 16, 17, 18, 19 angeordnet. Die Aufnahmen 16, 17, 18, 19 bilden Formschlusskonturen 46-49.In die Aufnahmen 16, 17, 18, 19 greifen am Kupplungsarm 2 seitlich angeordnete Formschlusskonturen 26, 27 ein, z.B. Formschlussvorsprünge 28, 29. Die Formschlussvorsprünge 28, 29 werden z.B. durch die Riegelnasen 6, 7 gebildet. Die Aufnahmen 16, 17 dienen zum Festlegen des Kupplungsarmes 2 in der Gebrauchsstellung H, die Aufnahmen 18, 19 zum Festlegen des Kupplungsarmes 2 in der Nichtgebrauchsstellung C.

Die Anordnung der Aufnahmen 16 bis 19 ist so gewählt, dass der Kupplungsarm 2 in der Gebrauchsstellung H parallel zur Längsachse des Fahrzeuges angeordnet ist und zwischen der Nichtgebrauchsstellung C und der Gebrauchsstellung H einen horizontalen Winkel von annähernd 90° durchläuft. Die Aufnahmen 16, 17, 18, 19 sind z.B. um jeweils 90° zueinander versetzt. Es versteht sich, dass zwischen den Aufnahmen 16, 17 einerseits und andererseits den Aufnahmen 18, 19 auch andere Winkelabstände vorgesehen sein könnten, z.B. wenn der Drehwinkel des Kupplungsarms 2 zwischen der Nichtgebrauchsstellung C und der Gebrauchsstellung H kleiner oder größer als 90 Grad sein soll. Ferner ist es lediglich vorteilhaft, nicht aber zwingend nötig, dass die Aufnahmen 16, 17 und 18, 19 einander jeweils gegenüberliegen. Ferner ist z.B. auch eine sternförmige Aufnahmenanordnung mit drei um jeweils 60 Grad drehwinkelversetzten Aufnahmenanordnung an fahrzeugseitigen Halter einer erfindungsgemäßen Anhängekupplung möglich.

Die Aufnahmen 16, 17, 18, 19 sind z.B. dachkantförmig. Runde und/oder sonstige polygonale Aufnahmen sind möglich.

Jeweils zwei gegenüberliegende Aufnahmen 16, 17 und 18, 19 haben das gleiche vertikale Tiefenmaß A oder B. Die Tiefenmaße A, B sind unterschiedlich. Das Tiefenmaß A definiert einen oberen Anschlag des Kupplungsarms 2 in der Gebrauchsstellung H, das Tiefenmaß B einen oberen Anschlag des Kupplungsarms 2 in der Nichtgebrauchsstellung C. Das Tiefenmaß B wirkt sich darauf aus, wie tief der Kupplungsarm in der Nichtgebrauchsstellung C hinter einer Fahrzeugheckverkleidung oder einem Stoßfänger in das Aufnahmerohr 13 einschiebbar ist.

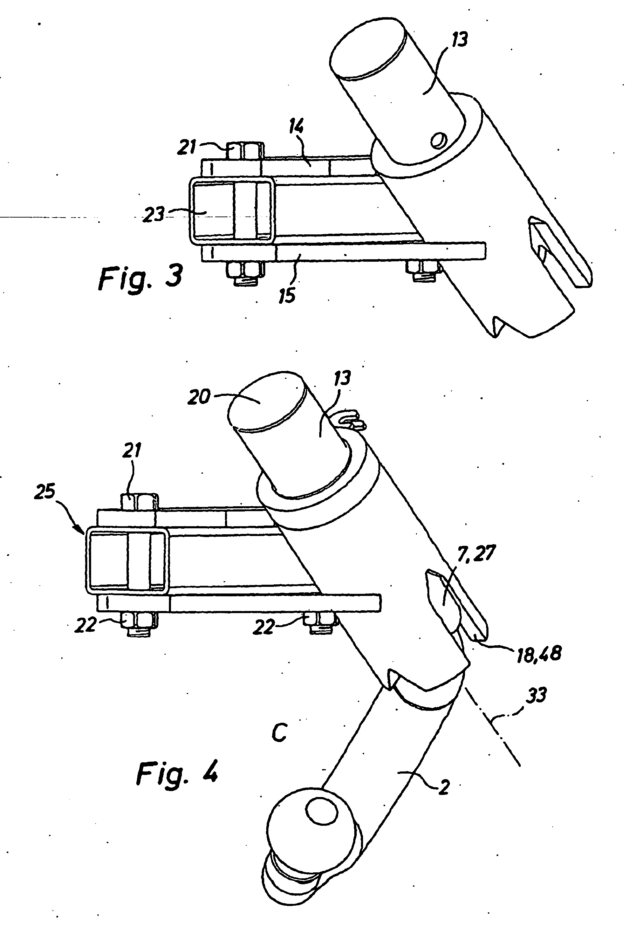

Fig. 3 zeigt das Aufnahmerohr 13 und die Befestigungslaschen 14, 15, welche mit zwei Schrauben 21, 22 am hier geschnitten dargestellten Träger 23 befestigt sind.

Fig. 4 zeigt die Anhängekupplung 1 im zusammengebauten Zustand in der Nichtgebrauchsstellung C. Die Nichtgebrauchsstellung C bildet eine erste obere Stellung. Die Riegelnasen 6, 7 greifen derart in die Aufnahmen 18, 19 ein, dass die Flächen der Riegelnasen 6, 7 an den Flächen der Aufnahmen 18, 19 anliegen und eine formschlüssige Verbindung besteht. Dadurch wird ein Drehen des Kupplungsarmes 2 um die Mittelachse 33 des Achskörpers 3 verhindert.

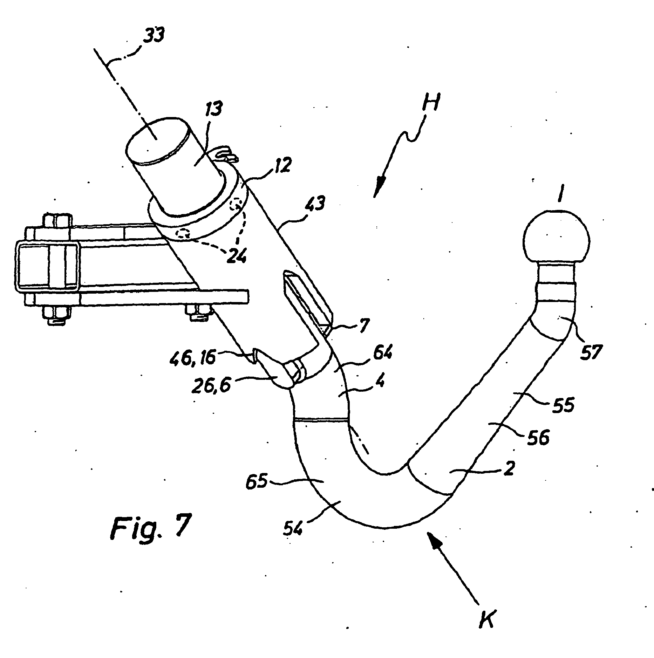

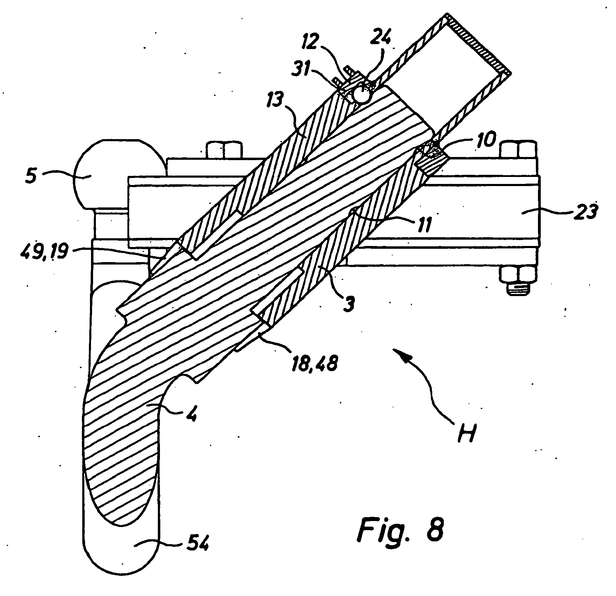

Eine Verriegelung 12 zwischen Aufnahmerohr 13 und Achskörper 3 hält den Kupplungsarm 2 in der Nichtgebrauchsstellung C oder der Gebrauchsstellung H. Die Verriegelung 12 enthält mindestens ein an einer Führungseinrichtung 31 gelagertes, z.B. von radial außen in Ausnehmungen 10, 11 am Kupplungsarm 2 eingreifendes Verriegelungsformschlusselement, z.B. eine oder mehrere Kugeln 24, siehe Figuren 7, 8. Die Verriegelungsnuten 10, 11 bilden Verriegelungsformschlussaufnahmen und sind am Achskörper 3 angeordnet. Die Ausnehmungen 10, 11 sind bezüglich der Linearverstellrichtung des Kupplungsarms 2 entlang der Linearführung 43, z.B. des Aufnahmerohrs 13, axial zueinander beabstandet. Die Ausnehmung 11 ist der Nichtgebrauchsstellung C, die Ausnehmung 10 der Gebrauchsstellung H zugeordnet. Die Ausnehmungen 10, 11 sind z.B. Verriegelungsnuten 40, 41. Anstelle der als Ringnuten ausgestalteten Verriegelungsnuten 40, 41 sind z.B. auch Kugelkalotten denkbar.

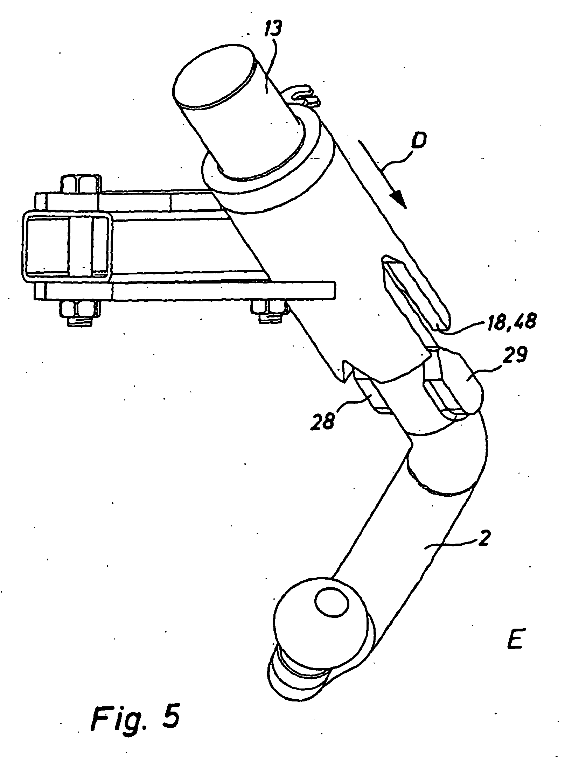

Die Fig. 5 bis 7 zeigen ein Ausschwenken des Kupplungsarmes von der Nichtgebrauchsstellung C in die Gebrauchsstellung H. Nach Lösen der nicht dargestellten Verriegelung wird der Kupplungsarm 2 schräg nach unten in Pfeilrichtung D gezogen oder bewegt sich von selbst durch Schwerkraft in Pfeilrichtung D, bis er sich in einer unteren Stellung gemäß Fig. 5 befindet. Diese bildet eine Zwischenstellung E. Diese Bewegung kann durch einen Anschlag begrenzt sein.

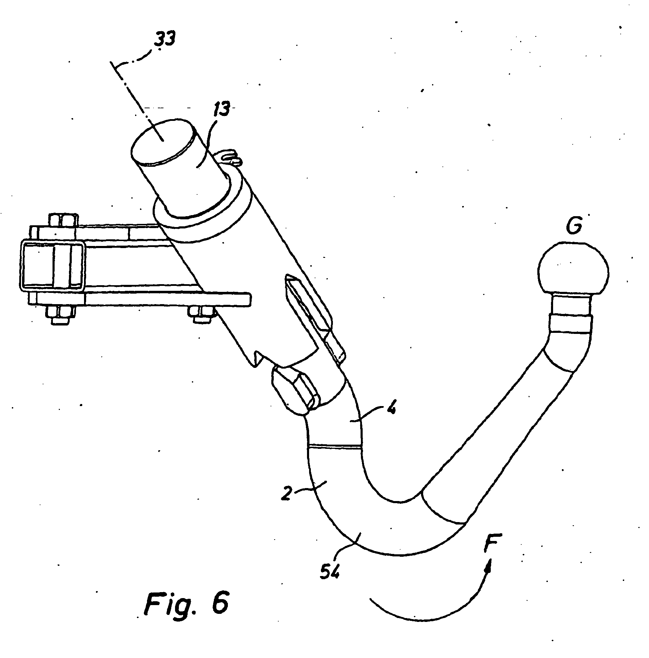

In Fig. 6 wurde der Kupplungsarm 2 in Pfeilrichtung F aus der Zwischenstellung E gemäß Fig. 5 um ca. 90° um die Mittelachse des Achskörpers 3 in die Zwischenstellung G geschwenkt. Diese Bewegung kann durch einen Anschlag begrenzt sein.

In Fig. 7 ist der Kupplungsarm 2 in Pfeilrichtung K soweit nach oben geschoben, bis die Riegelnase 6 in die Aufnahme 16 und die Riegelnase 7 in die Aufnahme 17 eingreift, so dass die Flächen der Riegelnasen 6, 7 an den Flächen der Aufnahmen 16, 17 anliegen und eine formschlüssige Verbindung besteht. Dadurch wird ein Drehen des Kupplungsarmes 2 um die Mittelachse des Achskörpers 3 verhindert. Der Kupplungsarm 2 ist dann in der Gebrauchstellung H. Die Gebrauchstellung H bildet eine zweite obere Stellung.

Die erste obere Stellung des Kupplungsarms 2 liegt vorteilhaft oberhalb der zweiten oberen Stellung, so dass die Anhängekupplung 1 in der Nichtgebrauchsstellung C eine größere Bodenfreiheit des Fahrzeugs 25 ermöglicht.

Die Verriegelung 12 zwischen Aufnahmerohr 13 und Achskörper 3 hält den Kupplungsarm 2 in der Gebrauchstellung H.

Eine erfindungsgemäße Anhängekupplung, z.B. die oben beschriebene Anhängekupplung 1, kann auch in Fahrzeuge mit geringer Bodenfreiheit problemlos integriert werden. Der Herstellungsaufwand für die erfindungsgemäße Anhängekupplung ist nur geringfügig höher als bei bekannten abnehmbaren Anhängekupplungen.

## Patentansprüche

1. Anhängekupplung für Kraftfahrzeuge, insbesondere Personenkraftwagen, mit einem am Kraftfahrzeug befestigbaren Halter (30) und mit einem Kupplungsarm (2), der an einem Endbereich eines in einer Gebrauchsstellung (H) in Fahrzeuglängsrichtung verlaufenden, hochstehenden Armabschnitts (55) ein Kopfstück (5) zum lösbaren Befestigen eines Anhängers trägt, und an einem anderen Endbereich mit einem durch eine Linearführung (43) des Halters geführten Achskörper (3) fest verbunden ist und zwischen der Gebrauchsstellung (H), bei der der Kupplungsarm (2) nach hinten vor das Fahrzeug vorsteht, und einer im wesentlichen verborgenen Nichtgebrauchsstellung (C) manuell oder motorisch hin und her verstellbar ist, wobei der Kupplungsarm (2) zum Verstellen zwischen der Gebrauchsstellung (H) und der Nichtgebrauchsstellung (C) der Kupplungsarm (2) am Halter (30) drehbar und an der Linearführung (43) linear verstellbar ist, wobei die Linearführung (43) schräg zur Horizontalen angeordnet ist, so dass der Kupplungsarm (2) nach Lösen einer Verrieglung (12) zum Verriegeln des Kupplungsarms (2) am Halter (30) zwischen der Gebrauchsstellung (H) und der Nichtgebrauchsstellung (C) zwischen einer oberen und einer unteren Stellung linear schräg verstellbar und zumindest in der unteren Stellung drehbar ist, und wobei der Kupplungsarm (2) zwischen dem in der Gebrauchsstellung (H) hochstehenden Armabschnitt (55) und dem Achskörper (3) eine erste Krümmung (4) und eine zweite Krümmung (54) aufweist, **dadurch gekennzeichnet,**
- **dass** die Verriegelung (12) mindestens ein an einer fahrzeugfesten Führungseinrichtung beweglich gelagertes und in Richtung des Kupplungsarms (2) in eine Verriegelungsstellung verlagerbares Verriegelungsformschlusselement (24) aufweist, das in der Verriegelungsstellung in mindestens eine Verriegelungsformschlussaufnahme (40, 41) am Kupplungsarm (2) eingreift und für das mindestens eine Verriegelungsformschlusselement (24) am Kupplungsarm (2) axial zueinander beabstandete erste und zweite Verriegelungsformschlussaufnahmen (40, 41) angeordnet sind, von denen mindestens eine erste Verriegelungsformschlussaufnahme (41) für die Gebrauchsstellung und mindestens eine zweite Verriegelungsformschlussaufnahme (40) für die Nichtgebrauchsstellung vorgesehen sind, und/oder
- **dass** Formschlusskonturen (46-49) am Halter (30) und Formschlusskonturen (26, 27) am Kupplungsarm (2) vorgesehen sind, die in der Gebrauchstellung (H) und in der Nichtgebrauchsstellung (C) zum drehfesten Festlegen des Kupplungsarms (2) am Halter (30) ineinander eingreifen, wobei die Formschlusskonturen (46-49) am Halter (30) für einen Eingriff der Formschlusskonturen (26, 27) am Kupplungsarm (2) für die Gebrauchsstellung (H) und die Nichtgebrauchsstellung (C) unterschiedliche Eindringtiefen aufweisen, so dass der Kupplungsarm (2) in Gebrauchsstellung (H) und der Nichtgebrauchsstellung (C) einen unterschiedlichen Abstand zu einer Fahrbahnoberfläche aufweist.

2. Anhängekupplung nach Anspruch 1, **dadurch gekennzeichnet, dass** die Linearführung (43) schräg zur Horizontalen, insbesondere ca. 45° bezüglich der Horizontalen, geneigt ist.

3. Anhängekupplung nach Anspruch 1 oder 2, **dadurch gekennzeichnet, dass** die Linearführung (43) im wesentlichen in Fahrzeugquerrichtung verläuft.

4. Anhängekupplung nach einem der vorhergehenden Ansprüche, **dadurch gekennzeichnet, dass** die erste Krümmung (4) und die zweite Krümmung (54) gegensinnig gekrümmt sind.

5. Anhängekupplung nach einem der vorhergehenden Ansprüche, **dadurch gekennzeichnet, dass** die erste Krümmung (4) bezüglich der Gebrauchstellung (H) zur Vertikalen nach unten hin gebogen ist und die zweite Krümmung (54) nach oben hin zur Vertikalen zurück gebogen ist.

6. Anhängekupplung nach einem der vorhergehenden Ansprüche, **dadurch gekennzeichnet, dass** die erste Krümmung (4) und die zweite Krümmung (54) quer zur Ebene ihrer jeweiligen Krümmung zueinander winkelig sind.

7. Anhängekupplung nach einem der vorhergehenden Ansprüche, **dadurch gekennzeichnet, dass** die erste Krümmung (4) und die zweite Krümmung (54) aufeinander folgen.

8. Anhängekupplung nach einem der Ansprüche 1 bis 6, **dadurch gekennzeichnet, dass** die erste Krümmung (4) und die zweite Krümmung (54) zumindest teilweise überlagert sind.

9. Anhängekupplung nach einem der vorhergehenden Ansprüche, **dadurch gekennzeichnet, dass** die Formschlusskonturen (46-49) am Halter (30) zum Eingriff der Formschlusskonturen (26, 27) am Kupplungsarm (2) um einen Drehwinkel, um die der Kupplungsarm (2) zwischen der Gebrauchs- (H) und der Nichtgebrauchsstellung (C) verdreht wird, insbesondere um ca. 90°, zueinander versetzt sind, so dass der Kupplungsarm (2) in der Gebrauchsstellung (H) und der Nichtgebrauchsstellung (C) gegen Verdrehen sicherbar ist.

10. Anhängekupplung nach einem der vorhergehenden Ansprüche, **dadurch gekennzeichnet, dass** die Formschlusskonturen (46-49) des Halters (30) an einem stirnseitigen Endbereich der Linearführung (43) angeordnet sind, und dass die Formschlusskonturen (26, 27) am Kupplungsarm (2) am Ansatz zum Achskörper (3) angeordnet sind

11. Anhängekupplung nach einem der vorhergehenden Ansprüche, **dadurch gekennzeichnet, dass** die Formschlusskonturen (26, 27) am Kupplungsarm (2) Stifte und/oder Bolzen und/oder Nocken (6, 7) umfassen, die in entsprechende Gegenstücke oder Gegenkonturen (16, 17, 18, 19) an der fahrzeugfesten Linearführung (43) eingreifen, wenn die am Halter, insbesondere der Linearführung (43), angeordnete Verriegelung (12) den Achskörper (3) festsetzt.

12. Anhängekupplung nach einem der vorhergehenden Ansprüche, **dadurch gekennzeichnet, dass** der Kupplungsarm (2) in der Linearführung (43), insbesondere einem unteren Teil der Linearführung (43), drehbar ist.

13. Anhängekupplung nach einem der vorhergehenden Ansprüche, **dadurch gekennzeichnet, dass** die Linearführung (43) durch ein Aufnahmerohr (13) gebildet wird.

14. Anhängekupplung nach einem der vorhergehenden Ansprüche, **dadurch gekennzeichnet, dass** der Kupplungsarm (3) ausgehend von der Nichtgebrauchsstellung (C) nach Lösen der Verriegelung (12) durch die Linearführung (43) geführt durch Schwerkraft schräg nach unten fällt oder gleitet.

15. Anhängekupplung nach einem der vorhergehenden Ansprüche, **dadurch gekennzeichnet, dass** sich eine Verstellbarkeit des Kupplungsarms (2) aus drei Bewegungen zusammensetzt, wobei sich diese Bewegungen auch überlagern können, wobei der Kupplungsarm (2) ausgehend von der Nichtgebrauchsstellung (C) in einem ersten Bewegungsabschnitt durch die Linearführung (43) geführt linear schräg nach unten bewegt wird, wobei der Kupplungsarm (2) in einem zweiten Bewegungsabschnitt insbesondere innerhalb des unteren Teils der Linearführung (43) manuell insbesondere um ca. 90° verschwenkt wird, und wobei der Kupplungsarm (2) in einem dritten Bewegungsabschnitt manuell nach oben befördert wird, bis die Verriegelung (12) den Achskörper (3) mit dem Halter (30), insbesondere mit der Linearführung (43), in der Nichtgebrauchsstellung (C) und/oder der Gebrauchsstellung (H) fest verbindet.

16. Anhängekupplung nach einem der vorhergehenden Ansprüche, **dadurch gekennzeichnet, dass** der Kupplungsarm aus der unteren Stellung manuell nach oben in die Gebrauchsstellung (H) bewegen lässt, bis der Achskörper (3) im oberen Teil der Linearführung (13) durch eine Verriegelung (12) festgesetzt wird.

17. Anhängekupplung nach einem der vorhergehenden Ansprüche, **dadurch gekennzeichnet, dass** die Verriegelung (12) in den Achskörper (3) eingreift.

18. Anhängekupplung nach einem der vorhergehenden Ansprüche, **dadurch gekennzeichnet, dass** sie einen Verrieglungsantrieb zur motorischen Betätigung der Verriegelung (12) aufweist.

19. Anhängekupplung nach einem der vorhergehenden Ansprüche, **gekennzeichnet durch** eine Motoranordnung zum Schwenken und/oder linearen Verstellen des Kupplungsarmes (2).

20. Anhängekupplung nach einem der vorhergehenden Ansprüche, **dadurch gekennzeichnet, dass** sie eine mit dem Kupplungsarm (2) und dem Halter (30) verbundene Federanordnung aufweist, die bei einer Auszugsbewegung des Achskörpers (3) aus der Linearführung (43) spannbar ist.

## Claims

1. Trailer coupling for motor vehicles, in particular cars, with a holder (30) which may be attached to the motor vehicle, and with a coupling arm (2), carrying at one end section of an upright arm section (55) running in the vehicle longitudinal direction in a position of use (H), a head section (5) for releasable attachment of a trailer, and securely connected at another end section to an axial body (3) guided through a linear guide (43) of the holder, and which is adjustable to and fro, manually or powered, between the position of use (H) in which the coupling arm (2) extends rearwards beyond the vehicle and a substantially concealed inoperative position (C), wherein the coupling arm (2) may be rotated on the holder (30) for adjustment between the position of use (H) and the inoperative position (C) of the coupling arm (2) and adjusted linearly on the linear guide (43), wherein the linear guide (43) is mounted at an angle to the horizontal so that the coupling arm (2), after releasing an interlocking device (12) for locking the coupling arm (2) to the holder (30) between the position of use (H) and the inoperative position (C), may be adjusted between an upper and a lower position linearly at an angle and at least in the lower position is rotatable, and wherein the coupling arm (2) has between the arm section (55) which is upright in the position of use (H) and the axial body (3) a first curve (4) and a second curve (54), **characterised in that**
- the interlocking device (12) has at least one interlocking element (24) mounted movably on a guide device secured to the vehicle and able to be shifted in the direction of the coupling arm (2) into an interlocking position, which in the interlocking position engages in at least one interlocking location (40, 41) on the coupling arm (2), and for the interlocking element or elements (24) there are provided on the coupling arm (2) first and second interlocking locations (40, 41) spaced axially apart, of which at least one first interlocking location (41) is provided for the position of use and at least one second interlocking location (40) is provided for the inoperative position, and/or
- that interlocking contours (46-49) are provided on the holder (30) and interlocking contours (26, 27) are provided on the coupling arm (2), which in the position of use (H) and in the inoperative position (C) engage in one another for non-rotatable fixing of the coupling arm (2) on the holder (30), wherein the interlocking contours (46-49) on the holder (30) have different depths of penetration for engagement of the interlocking contours (26, 27) on the coupling arm (2) for the position of use (H) and the inoperative position (C), so that the coupling arm (2) in the position of use (H) and the inoperative position (C) has a different clearance from the road surface.

2. Trailer coupling according to claim 1, **characterised in that** the linear guide (43) is inclined at an angle to the horizontal, in particular approximately 45° to the horizontal.

3. Trailer coupling according to claim 1 or 2, **characterised in that** the linear guide (43) runs substantially in the vehicle longitudinal direction.

4. Trailer coupling according to any of the preceding claims, **characterised in that** the first curve (4) and the second curve (54) are curved in opposite directions.

5. Trailer coupling according to any of the preceding claims, **characterised in that** the first curve (4) is curved vertically downwards relative to the position of use (H), and the second curve (54) is curved back vertically upwards.

6. Trailer coupling according to any of the preceding claims, **characterised in that** the first curve (4) and the second curve (54) are at an angle to one another at right-angles to the plane of their respective curvature.

7. Trailer coupling according to any of the preceding claims, **characterised in that** the first curve (4) and the second curve (54) follow one another.

8. Trailer coupling according to any of claims 1 to 6, **characterised in that** the first curve (4) and the second curve (54) are at least partly superimposed.

9. Trailer coupling according to any of the preceding claims, **characterised in that** the interlocking contours (46-49) on the holder (30), to engage with the interlocking contours (26, 27) on the coupling arm (2), are offset from one another around an angle of rotation, around which the coupling arm (2) is rotated between the position of use (H) and the inoperative position (C), in particular through approximately 90°, so that the coupling arm (2) may be prevented from rotation in the position of use (H) and in the inoperative position (C).

10. Trailer coupling according to any of the preceding claims, **characterised in that** the interlocking contours (46-49) of the holder (30) are provided at an end face end section of the linear guide (43), and that the interlocking contours (26, 27) on the coupling arm (2) are provided as an attachment to the axial body (3).

11. Trailer coupling according to any of the preceding claims, **characterised in that** the interlocking contours (26, 27) on the coupling arm (2) comprise pins and/or bolts and/or cams (6, 7) which engage in corresponding mating elements or mating contours (16, 17, 18, 19) on the linear guide (43) secured to the vehicle when the interlocking device (12) provided on the holder, in particular the linear guide (43), fixes the axial body (3) in position.

12. Trailer coupling according to any of the preceding claims, **characterised in that** the coupling arm (2) is rotatable in the linear guide (43), in particular a lower section of the linear guide (43).

13. Trailer coupling according to any of the preceding claims, **characterised in that** the linear guide (43) is formed by a locating tube (13).

14. Trailer coupling according to any of the preceding claims **characterised in that** the coupling arm (2), starting from the inoperative position (C), after release of the interlocking device (12), falls or slides downwards at an angle through the force of gravity, guided by the linear guide (43).

15. Trailer coupling according to any of the preceding claims, **characterised in that** adjustability of the coupling arm (2) is comprised of three movements, wherein these movements may also be superimposed, wherein the coupling arm (2) starting from the inoperative position (C) is moved downwards linearly at an angle, guided by the linear guide (43) in a first movement section, wherein the coupling arm (2) in a second movement section, in particular within the lower section of the linear guide (43), is swivelled manually in particular through approximately 90°, and wherein the coupling arm (2) in a third movement section is moved manually upwards until the interlocking device (12) securely connects the axial body (3) to the holder (30), in particular to the linear guide (43), in the inoperative position (C) and/or the position of use (H).

16. Trailer coupling according to any of the preceding claims, **characterised in that** the coupling arm may be moved manually upwards from the lower position into the position of use (H), until the axial body (3) is fixed in the upper section of the linear guide (43) by an interlocking device (12).

17. Trailer coupling according to any of the preceding claims, **characterised in that** the interlocking device (12) engages in the axial body (3).

18. Trailer coupling according to any of the preceding claims, **characterised in that** it has an interlocking drive for powered operation of the interlocking device (12).

19. Trailer coupling according to any of the preceding claims, **characterised by** a motor unit for swivelling and/or linear adjustment of the coupling arm (2).

20. Trailer coupling according to any of the preceding claims, **characterised in that** it has a spring assembly connected to the coupling arm (2) and the holder (30), which may be tensioned during a withdrawal movement of the axial body (3) from the linear guide (43).

## Revendications

1. Attelage pour véhicules automobiles, en particulier voitures particulières, avec une console (30) pouvant être fixée sur le véhicule automobile et avec un bras d'attelage (2), qui porte au niveau d'une zone d'extrémité d'une section de bras (55) dressée, s'étendant dans une position d'utilisation (H) dans le sens longitudinal du véhicule, une tête (5) pour la fixation amovible d'une remorque, et qui est relié solidement au niveau d'une autre zone d'extrémité à un corps d'axe (3) guidé à travers un guidage linéaire (43) de la console et peut être déplacé manuellement ou de manière motorisée dans les deux sens entre la position d'utilisation (H), dans laquelle le bras d'attelage (2) dépasse du véhicule vers l'arrière, et une position de non-utilisation (C) essentiellement cachée, le bras d'attelage (2) pouvant être déplacé pour le déplacement entre la position d'utilisation (H) et la position de non-utilisation (C) de manière rotative au niveau de la console (30) et de manière linéaire au niveau du guidage linéaire (43), le guidage linéaire (43) étant agencé de manière oblique par rapport à l'horizontale de sorte que le bras d'attelage (2) peut être déplacé de manière linéairement oblique après désolidarisation d'un verrouillage (12) servant à verrouiller le bras d'attelage (2) sur la console (30) entre la position d'utilisation (H) et la position de non-utilisation (C) entre une position supérieure et une position inférieure et peut tourner au moins dans la position inférieure, et le bras d'attelage (2) présentant entre la section de bras (55) dressée dans la position d'utilisation (H) et le corps d'axe (3) une première courbure (4) et une deuxième courbure (54), **caractérisé en ce que**
- le verrouillage (12) présente au moins un élément à correspondance de forme de verrouillage (24) logé de manière mobile au niveau d'un dispositif de guidage fixé au véhicule et pouvant être déplacé dans le sens du bras d'attelage (2) dans une position de verrouillage et qui s'engrène dans la position de verrouillage dans au moins un logement à correspondance de forme de verrouillage (40, 41) sur le bras d'attelage (2) et des premiers et deuxièmes logements à correspondance de forme de verrouillage (40, 41) espacés axialement l'un de l'autre sont agencés pour l'au moins un élément à correspondance de forme de verrouillage (24) sur le bras d'attelage (2), au moins un premier logement à correspondance de forme de verrouillage (41) étant prévu pour la position d'utilisation et au moins un deuxième logement à correspondance de forme de verrouillage (40) étant prévu pour la position de non-utilisation, et/ou
- des profils à correspondance de forme (46 - 49) sont prévus sur la console (30) et des profils à correspondance de forme (26, 27) sont prévus sur le bras d'attelage (2), qui s'engrènent l'un dans l'autre dans la position d'utilisation (H) et dans la position de non-utilisation (C) pour la fixation bloquée en rotation du bras d'attelage (2) sur la console (30), les profils à correspondance de forme (46 - 49) sur la console (30) pour un engrènement des profils à correspondance de forme (26, 27) sur le bras d'attelage (2) présentant différentes profondeurs de pénétration pour la position d'utilisation (H) et la position de non-utilisation (C), de sorte que le bras d'attelage (2) présente dans la position d'utilisation (H) et dans la position de non-utilisation (C) une distance différente par rapport à une surface de chaussée.

2. Attelage selon la revendication 1, **caractérisé en ce que** le guidage linéaire (43) est incliné de manière oblique par rapport à l'horizontale, en particulier d'environ 45° par rapport à l'horizontale.

3. Attelage selon la revendication 1 ou 2, **caractérisé en ce que** le guidage linéaire (43) s'étend essentiellement dans le sens transversal du véhicule.

4. Attelage selon l'une quelconque des revendications précédentes, **caractérisé en ce que** la première courbure (4) et la deuxième courbure (54) sont cintrées en sens inverse l'une l'autre.

5. Attelage selon l'une quelconque des revendications précédentes, **caractérisé en ce que** la première courbure (4) est cintrée vers le bas par rapport à la verticale en ce qui concerne la position d'utilisation (H) et la deuxième courbure (54) est recourbée vers le haut par rapport à la verticale.

6. Attelage selon l'une quelconque des revendications précédentes, **caractérisé en ce que** la première courbure (4) et la deuxième courbure (54) forment un angle l'une par rapport à l'autre transversalement au plan de leur courbure respective.

7. Attelage selon l'une quelconque des revendications précédentes, **caractérisé en ce que** la première courbure (4) et la deuxième courbure (54) se suivent l'une l'autre.

8. Attelage selon l'une quelconque des revendications 1 à 6, **caractérisé en ce que** la première courbure (4) et la deuxième courbure (54) se superposent au moins en partie.

9. Attelage selon l'une quelconque des revendications précédentes, **caractérisé en ce que** les profils à correspondance de forme (46 - 49) sur la console (30) pour l'engrènement des profils à correspondance de forme (26, 27) sur le bras d'attelage (2) sont décalés l'un par rapport à l'autre d'un angle de rotation, autour duquel le bras d'attelage (2) tourne entre la position d'utilisation (H) et la position de non-utilisation (C), en particulier d'environ 90°, de sorte que le bras d'attelage (2) peut être bloqué contre la rotation dans la position d'utilisation (H) et dans la position de non-utilisation (C).

10. Attelage selon l'une quelconque des revendications précédentes, **caractérisé en ce que** les profils à correspondance de forme (46 - 49) de la console (30) sont agencés au niveau d'une zone d'extrémité frontale du guidage linéaire (43) et **en ce que** les profils à correspondance de forme (26, 27) sur le bras d'attelage (2) sont agencés à la base du corps d'axe (3).

11. Attelage selon l'une quelconque des revendications précédentes, **caractérisé en ce que** les profils à correspondance de forme (26, 27) sur le bras d'attelage (2) comportent des broches et/ou des axes et/ou des ergots (6, 7), qui s'engrènent dans des contre-éléments ou des contre-profils (16, 17, 18, 19) correspondants au niveau du guidage linéaire (43) fixé au véhicule, lorsque le verrouillage (12) agencé au niveau de la console, en particulier du guidage linéaire (43), fixe le corps d'axe (3).

12. Attelage selon l'une quelconque des revendications précédentes, **caractérisé en ce que** le bras d'attelage (2) peut tourner dans le guidage linéaire (43), en particulier dans une partie inférieure du guidage linéaire (43).

13. Attelage selon l'une quelconque des revendications précédentes, **caractérisé en ce que** le guidage linéaire (43) est formé par un tube de réception (13).

14. Attelage selon l'une quelconque des revendications précédentes, **caractérisé en ce qu'**après désolidarisation du verrouillage (12), le bras d'attelage (3) tombe ou glisse de la position de non-utilisation (C) vers le bas de manière oblique par gravité guidé par le guidage linéaire (43).

15. Attelage selon l'une quelconque des revendications précédentes, **caractérisé en ce que** la mobilité du bras d'attelage (2) se décompose en trois mouvements, ces mouvements pouvant aussi se superposer, dans un premier mouvement, le bras d'attelage (2) étant déplacé de la position de non-utilisation (C) vers le bas de manière linéairement oblique guidé par le guidage linéaire (43), dans un deuxième mouvement, le bras d'attelage (2) étant pivoté manuellement en particulier d'environ 90° en particulier à l'intérieur de la partie inférieure du guidage linéaire (43) et dans un troisième mouvement, le bras d'attelage (2) étant amené manuellement vers le haut jusqu'à ce que le verrouillage (12) relie solidement le corps d'axe (3) à la console (30), en particulier au guidage linéaire (43), dans la position de non-utilisation (C) et/ou dans la position d'utilisation (H).

16. Attelage selon l'une quelconque des revendications précédentes, **caractérisé en ce que** le bras d'attelage peut être déplacé manuellement de la position inférieure vers le haut dans la position d'utilisation (H) jusqu'à ce que le corps d'axe (3) soit fixé dans la partie supérieure du guidage linéaire (13) par un verrouillage (12).

17. Attelage selon l'une quelconque des revendications précédentes, **caractérisé en ce que** le verrouillage (12) s'engrène dans le corps d'axe (3).

18. Attelage selon l'une quelconque des revendications précédentes, **caractérisé en ce qu'**il présente un moteur de verrouillage pour l'actionnement motorisé du verrouillage (12).

19. Attelage selon l'une quelconque des revendications précédentes, **caractérisé par** un système motorisé conçu pour le pivotement ou le déplacement linéaire du bras d'attelage (2).

20. Attelage selon l'une quelconque des revendications précédentes, **caractérisé en ce qu'**il présente un ensemble ressort relié au bras d'attelage (2) et à la console (30), lequel ensemble peut être tendu lors d'un mouvement d'extraction du corps d'axe (3) hors du guidage linéaire (43).
